# EUROPÄISCHE PATENTSCHRIFT

(11) **EP 0 557 690 B1**
(45) Veröffentlichungstag und Bekanntmachung des Hinweises auf die Patenterteilung: **27.03.1996**
(21) Anmeldenummer: 93100185.3
(22) Anmeldetag: 08.01.1993
(51) Int. Cl.: H02G 11/00

(54) **Vorrichtung zum verschwenkbaren Anbringen von Einrichtungen**
Apparatus for attaching pivotable devices
Installation pour mettre en place des éléments pivotants

(30) Priorität: 30.01.1992 DE 4202492
(43) Veröffentlichungstag der Anmeldung: 01.09.1993
(73) Patentinhaber: Hailo-Werk Rudolf Loh GmbH & Co. KG, D-35708 Haiger (DE)
(72) Erfinder: Klaas, Manfred, W-6342 Haiger 3-Langenaubach (DE)
(74) Vertreter: Jeck, Anton, Dipl.-Ing.

(56) Entgegenhaltungen:
- DE-A- 3 304 160
- FR-A- 2 553 441
- US-A- 3 866 869

## Beschreibung

Die Erfindung betrifft eine Vorrichtung zum verschwenkbaren Anbringen eines Kabelhalters nach dem Oberbegriff des Anspruches 1.

Bei herkömmlichen Vorrichtungen der eingangs genannten Art, wie sie z.B. in der DE 33 04 160 A1 beschrieben sind, sind regelmäßig zusätzliche Sperr- oder Arretierkörper vorgesehen, die die Herstellungskosten der Vorrichtung unangemessen erhöhen, was unerwünscht ist. Ein weiterer Nachteil bekannter Sperrkörper besteht darin, daß sie mit erheblichen Kräften belastet werden, die zur Beschädigung des Grundkörpers führen können.

Ausgehend von dem obigen Stand der Technik liegt der Erfindung die Aufgabe zugrunde, die gattungsgemäße Vorrichtung ohne unangemessenen konstruktiven Aufwand so weiterzubilden, daß die jeweiligen Betriebslagen der Einrichtung mit minimalem Aufwand eingestellt werden können.

Die gestellte Aufgabe wird erfindungsgemäß dadurch gelöst, daß das Schwenkteil mit Bezug auf den Grundkörper zwischen zwei Endlagen verstellbar und nur in der einen und/oder in der anderen Endlage verschwenkbar ist.

Man erkennt, daß die Erfindung jedenfalls dann verwirklicht ist, wenn die Vorrichtung Eigenschaften eines Gelenkes sowie eines Schiebeteils gleichzeitig aufweist. Dabei ist von Bedeutung, daß die Eigenschaften des Gelenkes dann in Erscheinung treten, wenn das Schwenkteil mit Bezug auf den Grundkörper die eine oder andere Endlage erreicht hat, während zwischen diesen beiden Endlagen das Schwenkteil mit Bezug auf den Grundkörper die Eigenschaften eines Schiebeteils aufweist.

Weitere zweckmäßige und vorteilhafte Ausgestaltungen der Erfindung gehen aus den Unteransprüchen hervor.

Eine besonders zweckmäßige Ausgestaltung sieht vor, daß der Grundkörper bzw. das Schwenkteil Führungsnuten aufweist, in denen Zapfen des Schwenkteils bzw. des Grundkörpers führbar sind. Dabei ist es besonders zweckmäßig, wenn die Führungsnuten sich in Verstellrichtung des Schwenkteils erstrecken, während die Zapfen quer zur Verstellrichtung verlaufen. Im Rahmen dieses Erfindungsgedankens ist es besonders zweckmäßig, wenn die Außenumhüllung des Grundkörpers in etwa quaderförmig ist, wobei die Führungsnuten in den in Verstellrichtung sich erstreckenden Seiten- bzw. Innenwänden ausgebildet sind. Bezüglich der Herstellung einer einfachen betrieblichen Verbindung zwischen dem Grundkörper und dem Schwenkteil ist es zweckmäßig, wenn das untere Ende der Führungsnuten offen ist, während das obere Ende geschlossen ist. Dadurch wird zum einen ein ungewolltes Lösen beider Teile verhindert, und zum anderen die Herstellung der Verbindung vereinfacht.

Eine weitere zweckmäßige Ausgestaltung der Erfindung sieht vor, daß die vertikale Höhe des Schwenkteils in etwa der vertikalen Höhe des Grundkörpers entspricht und daß das Schwenkteil Führungsflächen aufweist, die im Betriebszustand der Vorrichtung annähernd abstandsfrei zum Grundkörper ausgebildet sind. Durch diese Führungsflächen wird gewährleistet, daß die beiden Teile nur dann gegeneinander verschwenkbar sind, wenn sie eine der beiden Endlagen einnehmen. Hierbei können diese Maßnahmen auch so getroffen sein, daß die Führungsflächen in Form von Rippen ausgebildet sind, die entlang der dem Schwenkteil zugewandten Abschnitten des Grundkörpers führbar sind. Um in den Endlagen eine einwandfreie gelenkige Verbindung zu gewährleisten, sieht eine weitere zweckmäßige Ausgestaltung der Erfindung vor, daß die Endabschnitte des Grundkörpers Abrundungen bzw. Anfasungen aufweisen, die es erlauben, den Grundkörper mit Bezug auf das Schwenkteil um mindestens 90° zu verschwenken.

Eine weitere zweckmäßige Ausgestaltung sieht vor, daß die Zapfen mit Bezug auf die Führungsflächen vorstehen und im Bereich des Schwenkteils ortsfest angeordnet sind. Dabei können diese Maßnahmen auch so getroffen sein, daß die Zapfen mit dem Schwenkteil lösbar verbindbar und in ortsfesten Laschen des Schwenkteils gelagert sind.

Um in einer der Endlagen des Schwenkteils auch zeitweilig feste Verbindungen herstellen zu können, sieht eine weitere zweckmäßige Ausgestaltung der Erfindung vor, daß in den einander zugekehrten und quer zur Verstellrichtung des Schwenkteils sich erstreckenden Stirnseiten Vorsprünge und Ausnehmungen ausgebildet sind, die ab einem bestimmten Abstand der Stirnseiten voneinander miteinander unverrückbar verbindbar sind. Dabei ist es zweckmäßig, wenn die Vorsprünge mit dem Grundkörper bzw. dem Schwenkteil lösbar verbindbar sind. Im Rahmen dieses Erfindungsgedankes ist es besonders zweckmäßig, wenn die Vorsprünge in Form von Stiften ausgebildet sind, die mit entsprechenden Ausnehmungen des Grundkörpers und/oder Schwenkteils formschlüssig verbindbar sind.

Ein Ausführungsbeispiel der Erfindung ist in der Zeichnung schematisch dargestellt und wird im folgenden näher erläutert. Es zeigen
- **Fig. 1**: einen Teil eines Bügeltisches mit einer Vorrichtung, die einen Kabelhalter mit Steckdose trägt,
- Fig. 2: die Steckdose nach Fig. 1 in Stirnansicht,
- Fig. 3: die in Fig. 2 dargestellte Steckdose in Richtung des Pfeiles III,
- Fig. 4: einen Grundkörper in Seitenansicht,
- Fig. 5: den in Fig. 4 dargestellten Grundkörper in Richtung des Pfeiles V,
- Fig. 6: den in Fig. 5 dargestellten Grundkörper in Richtung des Pfeiles VI und
- Fig. 7: einen Stift.

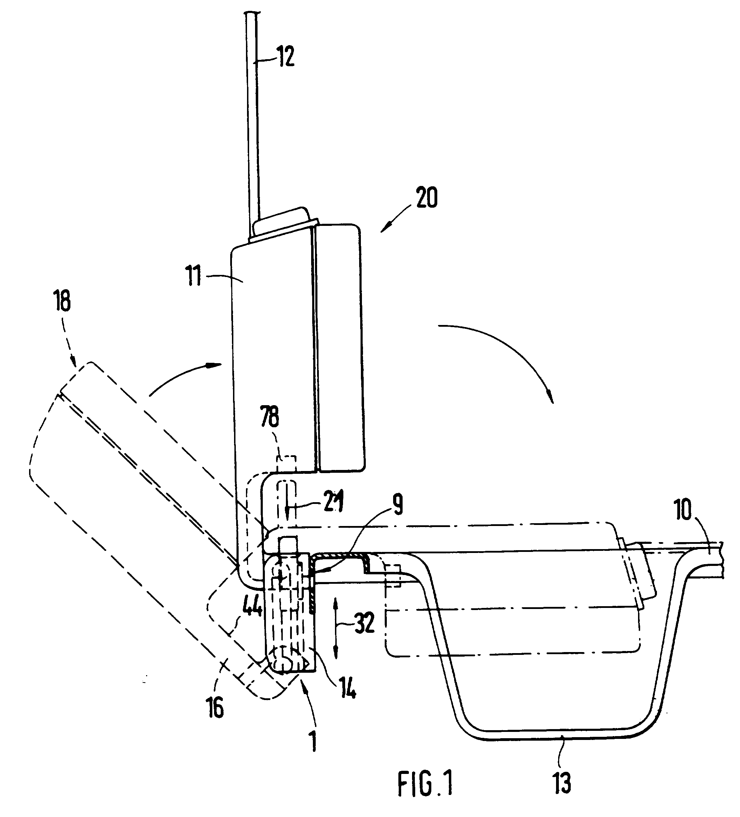

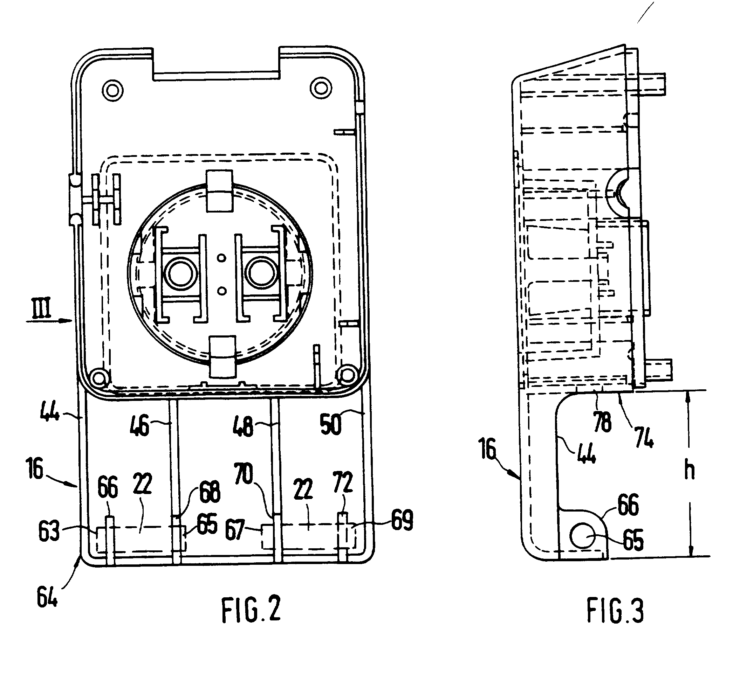

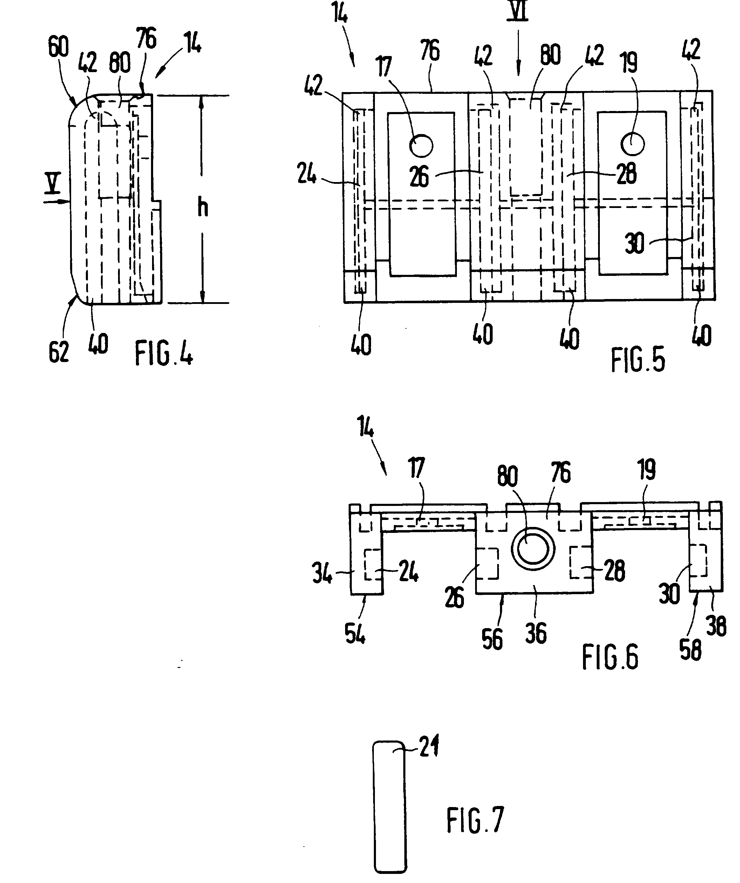

In Fig. 1 ist ein Teil eines Bügeltisches 10 mit einer Parkmulde 13 dargestellt, deren freies Ende in einen Träger 9 ausläuft, mit dem eine Vorrichtung 1 zum verschwenkbaren Anbringen von Kabelhaltern 12 mit einer Steckdose 11 verbunden ist. Die Vorrichtung 1 besteht aus einem Grundkörper 14 (vgl. insbesondere Figuren 4, 5 und 6) und einem Schwenkteil 16, das im Bodenbereich der Steckdose 14 angeformt ist. Der Grundkörper 14 ist mit dem Tragteil 9 ortsfest verbunden, und zwar mittels Nieten. Man erkennt, daß das Schwenkteil 16 mit Bezug auf den ortsfesten Grundkörper 14 zwischen zwei Endlagen 18 und 20 verstellbar und nur in diesen Endlagen verschwenkbar ist. Der Grundkörper 14 (vgl. Figuren 4, 5 und 6) weist Führungsnuten 24 bis 30 auf, in denen Zapfen 22 (vgl. Fig. 2) des Schwenkteils 16 führbar sind. Die Führungsnuten 24 bis 30 erstrecken sich in Verstellrichtung 32 des Schwenkteils 16, während die Zapfen 22 quer zu dieser Verstellrichtung verlaufen. Die Figuren 4, 5 und 6 lassen ferner erkennen, daß die Außenumhüllung des Grundkörpers 14 in etwa quaderförmig ist, wobei die Führungsnuten 24, 26, 28 und 30 in den in Verstellrichtung 32 sich erstreckenden Seitenwänden 34, 38 bzw. Innenwand 36 ausgebildet sind. Das untere Ende 40 der jeweiligen Führungsnut 24 bis 30 ist offen, während das obere Ende 42 geschlossen ist. Die Nuten 24 und 26 bzw. 28 und 30 sind einander zugekehrt.

Ferner lassen die Fig. 3 und 4 erkennen, daß die vertikale Höhe (h) des Schwenkteils 16 in etwa der vertikalen Höhe (h) des Grundkörpers 14 entspricht und daß das Schwenkteil 16 Führungsflächen 44 bis 50 aufweist, die im Betriebszustand der Vorrichtung annähernd abstandsfrei zum Grundkörper 14 angeordnet sind. Die Führungsflächen 44 bis 50 sind in Form von Rippen ausgebildet, die entlang der dem Schwenkteil 16 zugewandten Abschnitte 54, 56 und 58 des Grundkörpers 14 führbar sind.

Die Endabschnitte 60 und 62 (vgl. Fig. 4) des Grundkörpers weisen Abrundungen bzw. Anfasungen auf, die es erlauben, den Grundkörper 14 mit Bezug auf das Schwenkteil 16 um mindestens 90° zu verschwenken, wie Fig. 1 zu entnehmen ist (gestrichelt dargestelle Position der Steckdose 11). Die Zapfen 22 (vgl. Fig. 2, 3 und 7) sind mit dem Schwenkteil 16 lösbar verbindbar und in ortsfesten Laschen 66 bis 72 des Schwenkteils 16 gelagert. Jede Lasche besitzt eine Bohrung 65, in die die Zapfen 22 einsteckbar sind. Die Enden 63, 65, 67 und 69 sind in den Führungsnuten 24, 26, 28 und 30 führbar und stellen sicher, daß das Schwenkteil 16 sich beim Verstellen nicht vom Grundkörper 14 löst. In den einander zugekehrten und quer zur Verstellrichtug 32 des Schwenkteils 16 sich erstreckenden Stirnseiten 74 und 76 ist jeweils eine Bohrung 78 und 80 ausgebildet, in die ein Stift 22 einsteckbar ist. Der Stift 22 ist im Grundkörper 14 eingesteckt, wobei er teilweise herausragt. Aufgabe des Stiftes 21 ist es, zu gewährleisten, daß das Schwenkteil in seiner unteren Lage nur dann verschwenkbar ist, wenn der Stift mit dem Grundkörper 14 und dem Schwenkteil 16 nicht in Wirkverbindung steht. Die Länge des Stiftes 21 ist so gewählt, daß er aus der Ausnehmung 80 herausgenommen werden kann, wenn das Schwenkteil 17 die in Fig. 1 vertikal dargestellte Position einnimmt.

Ferner lassen die Figuren 5 und 6 erkennen, daß im Grundkörper 14 zwei Bohrungen 17 und 19 für Nieten vorgesehen sind, durch die eine feste Verbindung zwischen dem Grundkörper 14 und dem Tragabschnitt 9 herstellbar ist.

Beim Zusammenbau der Vorrichtung kann wie folgt vorgegangen werden:

Der Grundkörper 14 wird mit dem Tragabschnitt 9 der Parkmulde 13 vernietet, wobei die Nuten 24, 26, 28 und 30 nach unten offen sind. Die Abschnitte 54, 56 und 58 sind hierbei dem Schwenkteil 16 zugekehrt. Daraufhin werden die Zapfen 22, die im unteren Bereich 64 des Schwenkteils 16 in Laschen 66, 68, 70 und 72 gelagert sind, in die Führungsnuten 24 bis 30 eingeführt, wobei in diese Nuten nur die Enden 63, 65, 67 und 69 hineinragen. Dabei nimmt das Schwenkteil 16 die in Fig. 1 links gestrichelt dargestellte Position ein. Da der untere Endabschnitt 62 des Grundkörpers 14 angefast ist, kann das Schwenkteil 16 nach oben verschwenkt werden. Wird nun das Schwenkteil 16 in Richtung des Doppelpfeiles 32 vertikal nach oben verstellt, dann nimmt es die eigentliche vertikale Position ein, wobei der Abstand der einanander zugekehrten Stirnseiten 74 und 76 so groß ist, daß der Stift 21 in die Ausnehmung 80 gesteckt werden kann. Der aus der Öffnung 80 herausragende Abschnitt des Stiftes 21 ist so bemessen, daß das Schwenkteil 16 problemlos in die Parkmulde 13 verschwenkt werden kann, wie in Fig. 1 dargestellt ist. Wird das Schwenkteil 16 in vertikaler Richtung nach unten verstellt, dann ragt der aus der Öffnung 80 herausragende Abschnitt des Stiftes 21 in die Bohrung 78 ein, so daß das Schwenkteil 16 mit dem Grundkörper fest verbunden ist. Soll nun das Schwenkteil 16 vom Grundkörper 14 gelöst werden, dann nimmt es zunächst die in Fig. 1 dargestellte vertikale Position ein, in der der Stift 21 aus der Ausnehmung 80 herausgenommen werden kann. Danach wird das Schwenkteil nach unten versetzt und im unteren Bereich verschwenkt, wie gestrichelt dargestellt ist. In dieser Position verlassen die Stifte 21 die Führungsnuten 24 bis 30, wobei sich das Schwenkteil 16 vom Grundkörper löst.

## Patentansprüche

1. Vorrichtung zum verschwenkbaren Anbringen eines Kabelhalters (12) für Bügeleisenkabel an einem Bügelbrett (10) mit einem mit dem Bügelbrett (10) fest verbindbaren Grundkörper (14) sowie einem den Kabelhalter (12) tragenden und mit dem Grundkörper (14) verbindbaren Schwenkteil (16),
dadurch gekennzeichnet,
daß der Schwenkteil (16) mit bezug auf den Grundkörper (14) zwischen zwei Endlagen verstellbar und nur in der einen und/oder in der anderen Endlage verschwenkbar ist.

2. Vorrichtung nach Anspruch 1,
dadurch gekennzeichnet,
daß der Grundkörper (14) bzw. das Schwenkteil (16) Führungsnuten (24 - 30) aufweist, in denen Zapfen (21) des Schwenkteils (16) bzw. Grundkörpers (14) führbar sind.

3. Vorrichtung nach einem der Ansprüche 1 oder 2,
dadurch gekennzeichnet,
daß die Führungsnuten (24 - 30) sich in Verstellrichtung (32) des Schwenkteils (16) erstrecken, während die Zapfen (22) quer zur Verstellrichtung (32) verlaufen.

4. Vorrichtung nach einem der Ansprüche 1 bis 3,
dadurch gekennzeichnet,
daß die Außenumhüllung des Grundkörpers (14) in etwa quaderförmig ist, wobei die Führungsnuten (24 - 30) in den in Verstellrichtung (32) sich erstreckenden Seiten- bzw. Innenwänden (34, 36, 38) ausgebildet sind.

5. Vorrichtung nach einem der Ansprüche 1 bis 4,
dadurch gekennzeichnet,
daß das untere Ende (40) der Führungsnuten (24 - 30) offen ist, während das obere Ende (42) geschlossen ist.

6. Vorrichtung nach einem der Ansprüche 1 bis 5,
dadurch gekennzeichnet,
daß die vertikale Höhe (h) des Schwenkteils (16) in etwa der vertikalen Höhe (h) des Grundkörpers (14) entspricht und daß das Schwenkteil (16) Führungsflächen (44 - 50) aufweist, die im Betriebszustand der Vorrichtung annähernd abstandsfrei zum Grundkörper (14) angeordnet sind.

7. Vorrichtung nach einem der Ansprüche 1 bis 6,
dadurch gekennzeichnet,
daß die Führungsflächen (44 - 50) in Form von Rippen ausgebildet sind, die entlang der dem Schwenkteil (16) zugewandten Abschnitte (54, 56, 58) des Grundkörpers (14) führbar sind.

8. Vorrichtung nach einem der Ansprüche 1 bis 7,
dadurch gekennzeichnet,
daß die Endabschnitte (60, 62) des Grundkörpers (14) Abrundungen bzw. Anfasungen aufweisen, die es erlauben, den Grundkörper mit Bezug auf das Schwenkteil (16) um mindestens 90° zu verschwenken.

9. Vorrichtung nach einem der Ansprüche 1 bis 8,
dadurch gekennzeichnet,
daß die Zapfen (22) mit Bezug auf die Führungsflächen (44 - 50) vorstehen und im unteren Bereich (64) des Schwenkteils (16) ortsfest angeordnet sind.

10. Vorrichtung nach einem der Ansprüche 1 bis 9,
dadurch gekennzeichnet,
daß die Zapfen (22) mit dem Schwenkteil (16) lösbar verbindbar und in ortsfesten Laschen (66 - 72) des Schwenkteils (16) gelagert sind.

11. Vorrichtung nach einem der Ansprüche 1 bis 10,
dadurch gekennzeichnet,
daß in den einander zugekehrten und quer zur Verstellrichtung (32) des Schwenkteils (16) sich erstreckenden Stirnseiten (74, 76) Vorsprünge (21) und Ausnehmungen (78, 80) ausgebildet sind, die ab einem bestimmten Abstand der Stirnseiten (74, 76) voneinander miteinander verbindbar sind.

12. Vorrichtung nach einem der Ansprüche 1 bis 11,
dadurch gekennzeichnet,
daß die Vorsprünge (21) mit dem Grundkörper (14) bzw. dem Schwenkteil lösbar verbindbar sind.

13. Vorrichtung nach einem der Ansprüche 1 bis 12,
dadurch gekennzeichnet,
daß die Vorsprünge (21) in Form von Stiften ausgebildet sind, die mit entsprechenden Ausnehmungen (80) formschlüssig verbindbar sind.

## Claims

1. Apparatus for the pivotable mounting of a cable holder (12) for iron cables on an ironing board (10), having a basic body member (14), which is securely connectable to the ironing board (10), and a pivotable member (16), which supports the cable holder (12) and is connectable to the basic body member (14), characterised in that the pivotable member (16) is displaceable between two end positions with respect to the basic body member (14) and is only pivotable in one and/or other end position.

2. Apparatus according to claim 1, characterised in that the basic body member (14) and the pivotable member (16) each have guide grooves (24 - 30), in which pins (21) of the pivotable member (16), or respectively of the basic body member (14), are guidable.

3. Apparatus according to one of claims 1 or 2, characterised in that the guide grooves (24 - 30) extend in the direction of displacement (32) of the pivotable member (16), while the pins (22) extend transversely relative to the direction of displacement (32).

4. Apparatus according to one of claims 1 to 3, characterised in that the outer cover of the basic body member (14) is substantially cuboid, the guide grooves (24 - 30) being provided in the lateral and internal walls (34, 36, 38) extending in the direction of displacement (32).

5. Apparatus according to one of claims 1 to 4, characterised in that the lower end (40) of the guide grooves (24 - 30) is open, while the upper end (42) is closed.

6. Apparatus according to one of claims 1 to 5, characterised in that the vertical height (h) of the pivotable member (16) corresponds substantially to the vertical height (h) of the basic body member (14), and in that the pivotable member (16) has guide faces (44 - 50) which are disposed approximately in a spacing-free manner relative to the basic body member (14) when the apparatus is in its operational state.

7. Apparatus according to one of claims 1 to 6, characterised in that the guide faces (44 - 50) are configured in the form of ribs which are guidable along the portions (54, 56, 58) of the basic body member (14) facing the pivotable member (16).

8. Apparatus according to one of claims 1 to 7, characterised in that the end portions (60, 62) of the basic body member (14) have rounded parts or chamfered parts which permit the basic body member to pivot through at least 90° relative to the pivotable member (16).

9. Apparatus according to one of claims 1 to 8, characterised in that the pins (22) protrude with respect to the guide faces (44 - 50) and are fixedly disposed in the lower region (64) of the pivotable member (16).

10. Apparatus according to one of claims 1 to 9, characterised in that the pins (22) are detachably connectable to the pivotable member (16) and are mounted in fixed lugs (66 - 72) of the pivotable member (16).

11. Apparatus according to one of claims 1 to 10, characterised in that projection members (21) and recesses (78, 80) are provided in the end faces (74, 76) which face each other and extend transversely relative to the direction of displacement (32) of the pivotable member (16), said projection members and recesses being interconnectable when the end faces (74, 76) have a predetermined spacing from each other.

12. Apparatus according to one of claims 1 to 11, characterised in that the projection members (21) are connectable to the basic body member (14) or respectively to the pivotable member.

13. Apparatus according to one of claims 1 to 12, characterised in that the projection members (21) are configured in the form of pins, which are connectable to corresponding recesses (80) in a form-fitting manner.

## Revendications

1. Installation pour la mise en place pivotante d'un porte-câble (12) pour un câble de fer à repasser sur une planche à repasser (10), installation comportant un organe de base (14) pouvant être relié de manière rigide à la planche à repasser (10) ainsi qu'un élément pivotant (16) pouvant être relié à l'organe de base (14),
caractérisée
en ce que l'élément pivotant (16) peut par rapport à l'organe de base (14) occuper deux positions terminales et ne peut être pivoté que dans l'une/ou dans l'autre de ces positions terminales.

2. Installation suivant la revendication 1,
caractérisée
en ce que l'organe de base (14) ou l'élément pivotant (16) présente des rainures de guidage (24 - 30), dans lesquelles peuvent être guidées des tourillons (21) de l'élément pivotant (16) ou de l'organe de base (14).

3. Installation suivant l'une des revendications 1 ou 2,
caractérisée
en ce que les rainures de guidage (24 - 30) s'étendent dans la direction de réglage (32) de l'élément pivotant (16), tandis que les tourillons (22) sont orientés transversalement à la direction de réglage (32).

4. Installation suivant l'une quelconque des revendications de 1 à 3,
caractérisée
en ce que l'enveloppe extérieure de l'organe de base (14) est sensiblement de forme parallélépipédique, les rainures de guidage (24 - 30) étant formées dans les parois latérales ou intérieures (34, 36, 38) situées dans la direction de réglage (32).

5. Installation suivant l'une quelconque des revendications de 1 à 4,
caractérisée
en ce que l'extrémité inférieure (40) des rainures de guidage (24 - 30) est ouverte, tandis que l'extrémité supérieure (42) est fermée.

6. Installation suivant l'une quelconque des revendications de 1 à 5,
caractérisée
en ce que la hauteur verticale (h) de l'élément pivotant (16) correspond sensiblement à la hauteur verticale (h) de l'organe de base et en ce que l'élément pivotant (16) présente des surfaces de guidage (44 - 50), lesquels dans la situation de fonctionnement de l'installation sont disposées sensiblement sans écartement de l'organe de base (14).

7. Installation suivant l'une quelconque des revendications de 1 à 6,
caractérisée
en ce que les surfaces de guidage (44 - 50) ont la forme de nervures, qui peuvent être guidées le long des tronçons (54, 56, 58) de l'organe de base (14) qui sont orientés vers l'élément pivotant (16).

8. Installation suivant l'une quelconque des revendications de 1 à 7,
caractérisée
en ce que les tronçons terminaux (60, 62) de l'organe de base (14) présentent des arrondis ou des biseaux, qui permettent de faire pivoter d'au moins 90° l'organe de base par rapport à l'élément pivotant (16).

9. Installation suivant l'une quelconque des revendications de 1 à 7,
caractérisée
en ce que les tourillons (22) font protubérance par rapport aux surfaces de guidage (44 - 50) et sont disposés de manière fixe dans la région inférieure (64) de l'élément pivotant (16).

10. Installation suivant l'une quelconque des revendications de 1 à 9,
caractérisée
en ce que les tourillons (22) sont reliés de manière amovible à l'élément pivotant (16) et sont montés dans des pattes fixes (55 - 72) de l'élément pivotant (16).

11. Installation suivant l'une quelconque des revendications de 1 à 10,
caractérisée
en ce que dans les côtés frontaux (74, 76) orientés l'un vers l'autre et transversalement à la direction de réglage (32) de l'élément pivotant (16) sont formés des protubérances (21) et des évidements (78, 80), qui à partir d'une distance déterminée l'un de l'autre des côtés frontaux (74, 76) peuvent être reliés l'un à l'autre.

12. Installation suivant l'une quelconque des revendications de 1 à 11,
caractérisée
en ce que les protubérances (21) peuvent être reliés de manière amovible avec l'organe de base ou avec l'élément pivotant.

13. Installation suivant l'une quelconque des revendications de 1 à 12,
caractérisée
en ce que les protubérances (21) ont la forme de chevilles qui peuvent être reliés par similarité de forme avec des évidements correspondants.
